Europäisches Patentamt

European Patent Office

Office européen des brevets

(11) Veröffentlichungsnummer: **0 116 824**
**A2**

(12) **EUROPÄISCHE PATENTANMELDUNG**

(21) Anmeldenummer: 84100074.8

(51) Int. Cl.³: **B 62 D 53/08**

(22) Anmeldetag: 05.01.84

(30) Priorität: 22.02.83 CH 983/83

(43) Veröffentlichungstag der Anmeldung:
29.08.84 Patentblatt 84/35

(84) Benannte Vertragsstaaten:
DE FR GB IT SE

(71) Anmelder: GEORG FISCHER AKTIENGESELLSCHAFT
Mühlentalstrasse 105
CH-8201 Schaffhausen(CH)

(72) Erfinder: Jakob, Lothar
Schrotzburgstrasse 1
D-7702 Gottmadingen(DE)

(72) Erfinder: Aschwanden, Felix
Limmattalstrasse 58
CH-8954 Geroldswil(CH)

(54) Gegossener Lagerbock.

(57) Es wird ein gegossener Lagerbock mit einem Kopf- und einem Kastenteil vorgeschlagen, der in einer kernlosen Giessweise hergestellt ist. Der Lagerbock (1) weist einen im wesentlichen U-förmigen Querschnitt auf. Der Kopfteil (2) des Lagerbockes ist im wesentlichen kugelkalottenförmig ausgebildet, und weist einen Durchbruch (6) auf. Durch die Verwendung des vorgeschlagenen Lagerbockes können Kosteneinsparungen verwirklicht werden, die sich aus der Gewichtsreduktion und dem geringeren Arbeitsaufwand ergeben (keine Kerne). Zudem ist durch die kugelkalottenförmige Ausgestaltung des Kopfes eine allseitige Verdrehung und Verwindung möglich, wodurch eine höhere Beanspruchung möglich ist.

Fig.1

EP 0 116 824 A2

GEORG FISCHER AKTIENGESELLSCHAFT,      8201 Schaffhausen

2363/FzT / 18.2.1983 / MS-ba /

Gegossener Lagerbock

Die vorliegende Erfindung betrifft einen gegossenen Lagerbock, mit einem Kopf- und einem Kastenteil, für die Lagerung für Sattelkupplungen.

Aus der EP-Veröffentlichung Nr. 0038928 ist ein Lagerbock
mit einem kastenförmigen Kopf bekannt, wobei die Kopfwandung durchgehend kreiszylinderförmig, und die Wanddicke
konstant ist. Der Kopf weist zwei offene Enden auf, durch
die ein Riegel herausragt.

Nachteilig bei diesem Lagerbock ist, dass der Kopfteil
nicht allseitig bewegbar, verwindbar und verdrehbar ist.
Die Spannungen, die bei der Verwindung des Chassisrahmens
auf den Lagerbock übertragen werden, können von diesem
nicht ohne Beschädigung des, den Kopfteil umgebenden Gummipolsters ausgeglichen werden.

Aufgabe der vorliegenden Erfindung ist es, einen Lagerbock
vorzuschlagen, der allseitig dreh- und bewegbar ist und
weniger aufwendig ist in der Herstellung. Zudem soll über

- 2 -

eine gezielte Gewichtseinsparung bessere Wirtschaftlichkeit erzielt werden.

Der erfindungsgemässe Lagerbock ist durch die Lehre des
Anspruches 1 gekennzeichnet.

Weitere vorteilhafte Ausgestaltungen gehen aus den abhängigen Ansprüchen hervor.

In der beigelegten Zeichnung wird ein bevorzugtes Ausführungsbeispiel der Erfindung näher beschrieben.

Es zeigen:

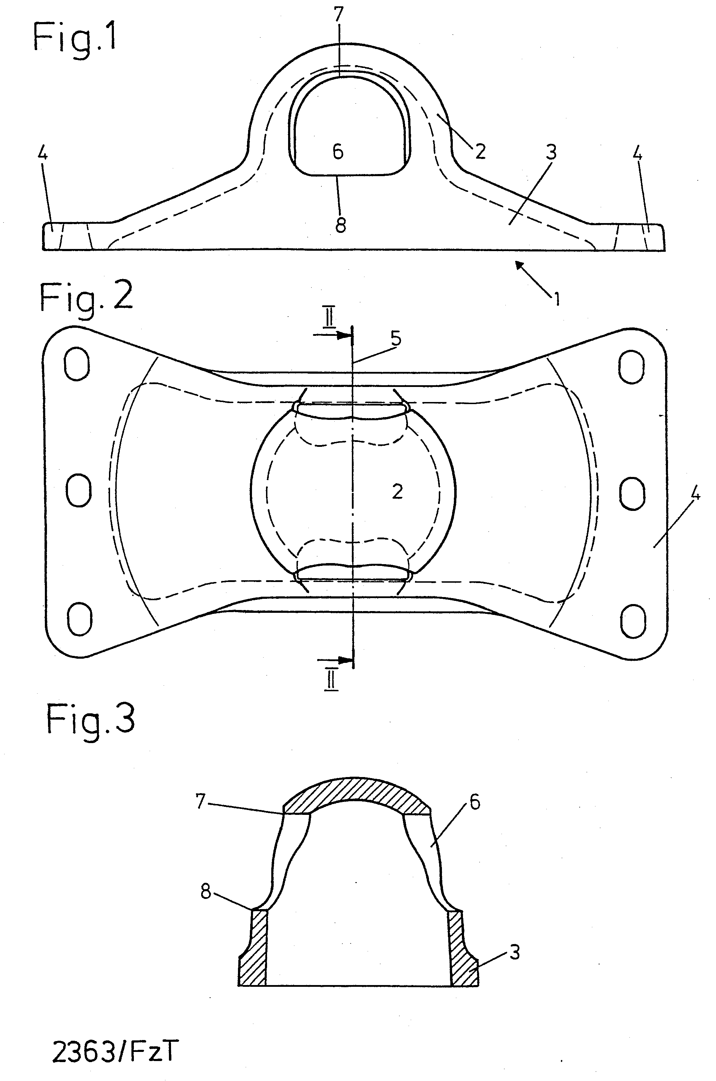

Fig. 1          eine Seitenansicht eines Lagerbockes,

Fig. 2          eine Draufsicht auf einen Lagerbock, und

Fig. 3          einen Querschnitt entlang der Linie II - II
                aus der Fig. 2.

Der Lagerbock 1 weist einen Kopfteil 2 und einen Kastenteil 3 auf. Flanschpartien 4 sind symmetrisch zur Querachse 5 anschliessend an den Kastenteil 3 angeordnet. Der
Kopfteil 2 ist im wesentlichen kugelkalottenförmig ausgebildet, und weist einen Durchbruch 6 auf. Der Durchbruch
weist einen Scheitel 7 und eine Basis 8 auf, wobei der
Scheitel des Durchbruches und der Scheitel des kalottenförmigen Kopfteiles auf einer Achse liegen. Der Durchbruch
6 ist derart angeordnet, das der Scheitel des Durchbruches
zur Längsachse des Lagerbockes 1 näher liegt als die
Basis 8 des Durchbruches. Die Wandung des Durchbruches
verläuft in einem spitzen Winkel zur Längsachse des Lagerbockes. Der Kastenteil 3 steigt von den **Flanschpartien** 4
zum Kopfteil 2 an und weist einen zum **Kopfteil sich** vertiefenden U-förmigen Querschnitt auf.

Zur Herstellung des beschriebenen Lagerbockes **wird** kein
Kern verwendet.

Sowohl durch die kernlose Form als auch **durch die** Wahl des
Werkstoffes kann der beschriebene Lagerbock **mit** wesentlichen Gewichtsreduktionen und somit **preisgünstiger** Hergestellt werden.

<u>P a t e n t a n s p r ü c h e</u>

2363/FzT

1. Gegossener Lagerbock mit einem Kopf- und einem Kastenteil, für die Lagerung von Sattelkupplungen, dadurch
gekennzeichnet, dass er einen im wesentlichen U-förmigen Querschnitt aufweist, und dass im Kopfteil (2) ein
Durchbruch (6) angeordnet ist.

2. Lagerbock nach Anspruch 1, dadurch gekennzeichnet, dass
der Kopfteil (2) im wesentlichen kugelkalottenförmig
ausgebildet ist.

3. Lagerbock nach Anspruch 1, dadurch gekennzeichnet, dass
die Wandung des Durchbruches (6) in einem spitzen Winkel zur Längsachse des Lagerbockes verläuft.

4. Lagerbock nach Anspruch 3, dadurch gekennzeichnet, dass
der Scheitel des Durchbruches zur Längsachse des Lagerbockes näher liegt als die Basis des Durchbruches.

5. Lagerbock nach Anspruch 1, dadurch gekennzeichnet, dass
zu beiden Seiten des kalottenförmigen Kopfteiles je ein
U-förmiger Bereich angeordnet ist, der sich zu Flanschpartien (4) verjüngt.

6. Lagerbock nach den Ansprüchen 1 bis 5, dadurch gekennzeichnet, dass er kernlos hergestellt ist.

Fig.1

Fig.2

Fig.3

2363/FzT